(19) Europäisches Patentamt / European Patent Office / Office européen des brevets

(11) **EP 2 418 562 B1**

(12) **EUROPEAN PATENT SPECIFICATION**

(45) Date of publication and mention
of the grant of the patent:
**17.04.2013  Bulletin 2013/16**

(51) Int Cl.:
***G06F 3/01*** *(2006.01)*

(21) Application number: **10172813.7**

(22) Date of filing: **13.08.2010**

(54) **Modelling of hand and arm position and orientation**

Modellierung der Hand- und Armposition und -ausrichtung

Modelage de la position et orientation des mains et bras

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(43) Date of publication of application:
**15.02.2012  Bulletin 2012/07**

(73) Proprietor: **Deutsches Primatenzentrum GmbH (DPZ)**
**37077 Göttingen (DE)**

(72) Inventors:
 • **Scherberger, Hansjörg**
   **37077 Göttingen (DE)**
 • **Schaffelhofer, Stefan**
   **37075 Göttingen (DE)**

(74) Representative: **Vossius & Partner**
**Siebertstrasse 4**
**81675 München (DE)**

(56) References cited:
**WO-A1-02/37466      US-A1- 2002 012 014**
**US-B1- 6 515 669**

 • **XIWHUI WU ET AL: "A framework for calibration of electromagnetic surgical navigation systems" PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003; [IEEE/RSJ INTERNATIONAL CONFERENCE ON INTELLIGENT ROBOTS AND SYSTEMS], NEW YORK, NY : IEEE, US LNKD- DOI:10.1, vol. 1, 27 October 2003 (2003-10-27), pages 547-552, XP010672414 ISBN: 978-0-7803-7860-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a method and system for modelling a position and orientation of a primate hand and arm.

### BACKGROUND OF THE ART

Finger movements are highly complex. Therefore, human spend much of their childhood learning to use their hands. Holding and moving objects of different size, shape and weight i's part of our daily life, but the biomechanic system enabling these movements is highly sophisticated. The human hand as well as the hand of macaque monkeys are able to use 29 degrees of freedom. This fact and the wide range of motion (see Table below) allow primates to perform complex grasp types.

Table: Range of motion of a human hand (C. Youngblut, R. E. Johnston, S. H. Nash et al., "Review of virtual environment interface technology," I. f. D. Analyses, ed., 1996)

| Joint | Motion | Range |
|---|---|---|
| Thumb | Palmar Adduction | 90° |
| | Radial Abduction | 80-90° |
| | Opposition | 90° |
| | MCP flexion | 50° |
| | PIP Flexion | 80° |
| Digits | Abduction/Adduction | $\pm 15°$ |
| | Index MCP Flexion | 86-90° |
| | Index MCP Extension | 22-45° |
| | Index IP Flexon | 100-110° |
| | 2nd finger MCP Flex. | 91° |
| | 2nd finger MCP Ext. | 18° |
| | 2nd finger IP Flexion | 105° |

(MCP: metacarpal-interphalangeal joint, PIP: proximal-interphalangeal joint, IP: interphalangeal-joint)

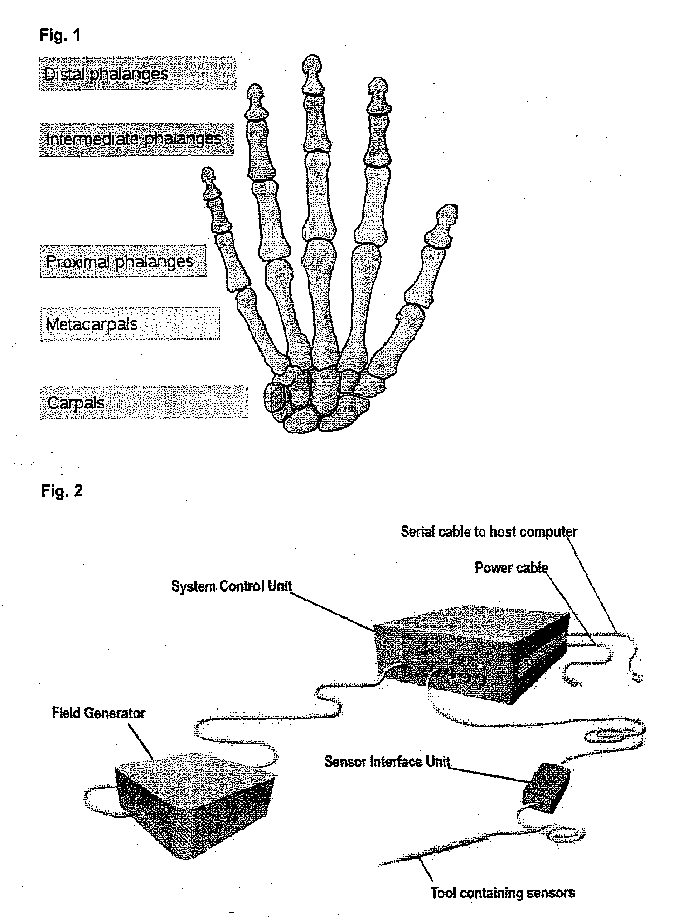

The human hand consists of 27 bones as illustrated in Fig. 1. The carpus account for 8, the metacarpus or palm contains five; the remaining fourteen are digital bones: fingers and thumb. The joints connecting them are named metacarpal-phalangeal joints, proximal-interphalangeal joints and distal-interphalangeal joints. The only movements permitted in the interphalangeal joints are flexion and extension, whereas the metacarpal-phalangeal joint is also able to perform adduction and abduction. The most versatile finger is the thumb, which is capable of bending in such a way that it can touch all the other digits on the hand. The opposable thumb is reserved to the primate species.

There have been known various tracking systems for tracking a position and/or an orientation of an orientation such as hand.

For example, a glove for measuring hand kinematics is known, wherein a flex sensor in the form of a strip adapted to change their impedance in proportion to the strain are provided, so that the angle of the finger joint can be evaluated (Simon A. Overduin et al. "An instrumented glove for small primates", Journal of Neuroscience Methods, 187 (2010) p100 to 104). However, such a strip has to be provided under and above each joint. It is to be noted that this glove provides the angle values but does not provide information on the positions in 3D space.

US 2002/00/2014 A is directed to attaching a sensor to an operator's hand to detect a hand shape and movement.

The object of the present invention is to provide a method and system for modelling a position as well as an orientation of a hand, i.e. the positions and orientations of the finger joints with as small a number of sensors as possible.

### DISCLOSURE OF THE INVENTION

In an aspect of the present invention, a method for modelling a position and orientation of a hand, includes the step of attaching at least a first sensor on a phalanx distalis of a finger. The first sensor is adapted to provide information on at least five degrees of freedom that correspond to three translations, yaw and pitch. A second sensor is placed at a fixed position relative to a dorsum or palm of the hand. The second sensor is adapted to provide information on at least six degrees of freedom that correspond to three translations, yaw, pitch and roll with respect to a point of the dorsum or palm of the hand. A position and orientation of each of the first and second sensors is detected. A first distance between said point and a metacarpal-phalangeal joint of the finger, a second distance between the metacarpal-phalangeal joint and a proximal interphalangeal joint, a third distance between the proximal interphalangeal joint and a distal interphalangeal joint, and a fourth distance between the distal interphalangeal joint and the first sensor are measured. A position and orientation of each of the three joints is calculated on the basis of the measured first to fourth distances, the detected position and orientation of the first sensor, and the detected position and orientation of the second sensor.

In one embodiment, the first sensor has a sensor coil with its axis being placed along a longitudinal direction of the finger. The second sensor has two sensor coils with their axes being placed in a geometrically defined position to each other so that the second sensor provides information on a roll of said point. A varying magnetic field is generated so that the first and second sensors induce voltages, so that at the detection step the position and orientation of each of the first and second sensors is detected based on the induced voltages.

To simplify the construction, the second sensor is preferably arranged on the dorsum or palm of the hand.

In a further aspect of the present invention, a system for modelling a position and orientation of a hand includes a glove with glove fingers and a modelling device. The glove includes at least a first sensor on a portion of the glove finger corresponding to a phalanx distalis of a finger. The first sensor is adapted to provide information on at least five degrees of freedom that correspond to three translations, yaw and pitch. The glove is also provided with a second sensor at a position that is fixed on a portion of the glove finger corresponding to a dorsum or palm the hand. The second sensor is adapted to provide information on at least six degrees of freedom that correspond to three translations, yaw, pitch and roll with respect to a point of the dorsum or palm of the hand. The modelling device includes a detector for detecting a position and orientation of each of the first and second sensors. The modelling device also includes a storage for storing a first distance between said point and a first joint of the glove finger corresponding to a metacarpal-phalangeal joint of the finger, a second distance between the first joint and a second joint of the glove finger corresponding to a proximal interphalangeal joint of the finger, a third distance between the second joint and a third joint of the glove finger corresponding to a distal interphalangeal joint of the finger, and a fourth distance between the third joint and the first sensor. The modelling device is further provided with a calculator for calculating a position and orientation of each of the three joints on the basis of the stored first to fourth distances, the detected position and orientation of the first sensor, and the detected position and orientation of the second sensor.

According to the present invention, it is possible to model a position and orientation of a hand preferably without placing additional sensors to detect the positions and orientations of the metacarpal-phalangeal joint, the proximal interphalangeal joint, the distal interphalangeal joint of the finger.

## BRIEF DESCRIPTION OF DRAWINGS

Fig.1 shows a human hand and its 27 bones;
Fig. 2 shows a measuring part of a modelling system according to a first embodiment of the present invention;
Fig. 3 shows an exemplary measurement volume within which a hand is to be placed;
Fig. 4 shows a coordinate system referenced to the field generator and a cubic measurement volume;
Fig. 5 shows a coordinate transformation;
Fig. 6 shows first sensors and a second sensor placed on a hand, joints and vectors used for hand-modelling;
Fig. 7 is a perspective view of a 5 DOF (degrees of freedom) magnetic sensor;
Fig. 8 shows a drawing to explain a calculation according to the first embodiment;
Fig. 9 shows an image of a real hand with sensors fixated with tapes and a modelled hand displayed on a monitor;
Fig. 10A shows a perspective view of the modelled hand;
Fig. 10B shows a side view of the modelled hand;
Fig. 11 shows sensors placed on an arm, joints and vectors used for arm-modelling according to a third embodiment of the present invention;
Fig. 12 shows other examples of sensor placement; and
Fig. 13 shows an example of sensor placement for optical tracking technologies.

## BEST MODES FOR IMPLEMENTING THE INVENTION

With reference to the drawings, preferred embodiments of the present invention will be explained below.

FIRST EMBODIMENT

Configuration

Referring to Fig. 2, the modelling system of the present embodiment includes a tool having a plurality of sensors to be attached to the finger and a separate modelling device, and uses an electro-magnetic principle to track hand and finger movements. In other words, the sensors to be placed on the fingers are sensor coils to which a varying magnetic field is applied and a resultant voltage is outputted to the modelling device.

As one example of such a modelling system a Aurora measurement system developed by Northern Digital Inc., Waterloo, Canada may be used. The measurement system may have a sampling rate of 40 Hz per sensor. A serial interface (Recommended Standard 232) may be used to transfer data from the system to a host computer with a maximum data rate of 115 kBaud.

The modelling system includes a field generator, a system control unit (SCU), sensor coils and a host computer (not shown), and may further include a sensor interface unit (SIU). The SCU or other power source provides power to the field generator, which in turn produces a series of varying magnetic fields, creating a predetermined volume of varying magnetic flux. Sensors connected to the SCU, via the SIU, are induced by the varying magnetic fields of the field generator. The SIU converts the voltages induced by the sensors, into digital data that is processed by the SCU to calculate the position and orientation of each of the sensors. On request of the host computer, a package including information of all the sensors may be prepared and sent over a device interface (RS 323) to the host computer.

Instead, the sensors or SIU may be provided (or connected) with a wireless transmitter for transmitting a signal corresponding to the measured voltages or the calculated position and orientation of each of the sensors to the SIU or SCU (receiver), respectively, for further processing. Such a configuration may be preferably implemented in a system (e.g. game system) in which the movement of the hand/finger is displayed on a monitor.

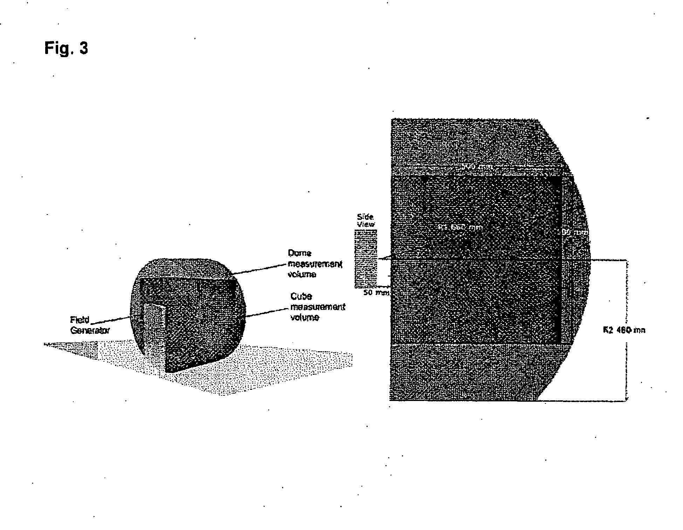

The field generator produces, for example, a cubic measurement volume (e.g. 500 mm x 500 mm x 500 mm) or a dome (R1=660 mm, R2=480 mm), as shown in Fig. 3.

In the present embodiment the sensor coil is an AUROR sensor coils by Northern Digital Inc. In one example, the sensor coil has a diameter of 0.5 mm and a length of 8 mm.

The modelling system of the present embodiment includes six magnetic sensors (five first sensors and a second sensor).

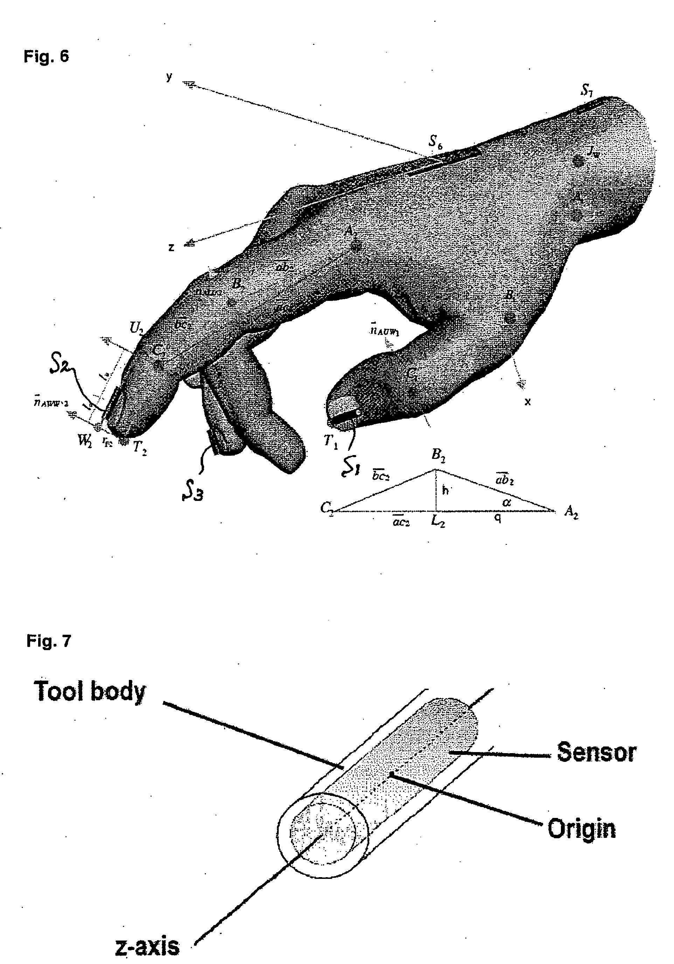

A sensor coil (each constituting the first sensor) is placed on a phalanx distalis of each of the digits and the thumb to provide 5 DOF (degrees of freedom) information: the Cartesian coordinates (x,y,z) (three translations) as well as the yaw angle and the pitch angle of the sensor (in Fig. 6 three sensor coils $S_1$, $S_2$, $S_3$ of the five are shown). For this purpose, the axis of the coil of the first sensor is placed along a longitudinal direction of the finger. It is noted that since roll information of each finger around the finger axis is unnecessary (because the fingers are rotated together with the remaining part of the hand; this roll information is detected by a second sensor as explained below), a sensor providing 5 DOF information is sufficient.

On other hand, two sensor coils constituting the second sensor are placed on the dorsum so as to provide 6 DOF information: the Cartesian coordinates (x,y,z) (three translations) as well as the yaw angle, the pitch angle and the roll angle of a point of the dorsum. That is, the second sensor provides information on a hand roll angle. For this purpose, the axes of the two sensor coils are placed in a geometrically defined position (e.g. orthogonal to each other; it is possible to obtain the roll information unless the axes are parallel to each other) so that the second sensor provides information on a roll of a point of the dorsum.

Together the two sensor coils present a plane in space that can be rotated in all directions around the above-mentioned point (which is an origin of the local coordinate system $C_L$ of the second sensor).

The two sensor coils are tracked separately, but the outputs are processed by the SCU to determine the 6 DOF information of the above-mentioned point). For this process the SCU will use a geometrical relationship of the two sensor coils saved in a memory-chip (SROM, serial read only memory) inside the SIU connector (Fig. 2). The geometry of the two sensor coils can be determined by a user. After the user has entered the needed information in a graphical user interface of the modelling system, a file is created. This file can be written to the SROM chip over a serial interface. During the initialization of the sensor coils the SROM is read to identify the origin.

Hand-modelling

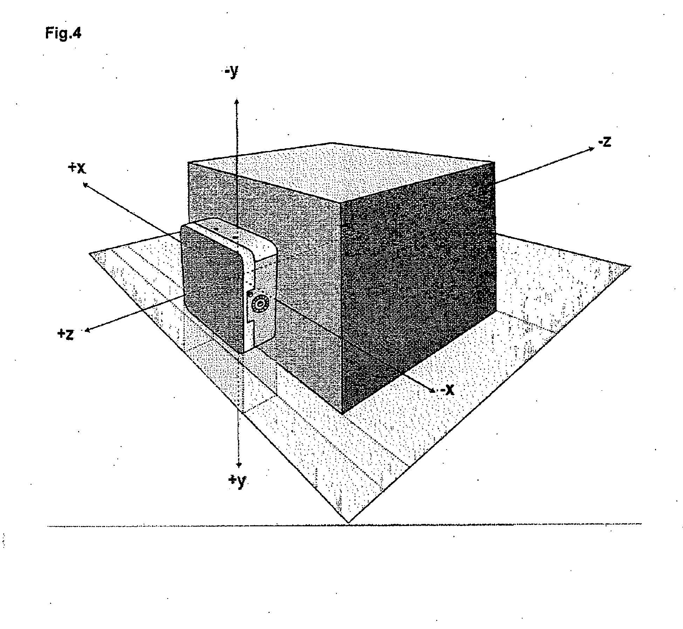

All calculations essential for hand-modelling are realized within the hardware configuration of the modelling system. The obtained position and orientation of the sensor will be referred to the coordinate system of the field generator (see Fig. 4).

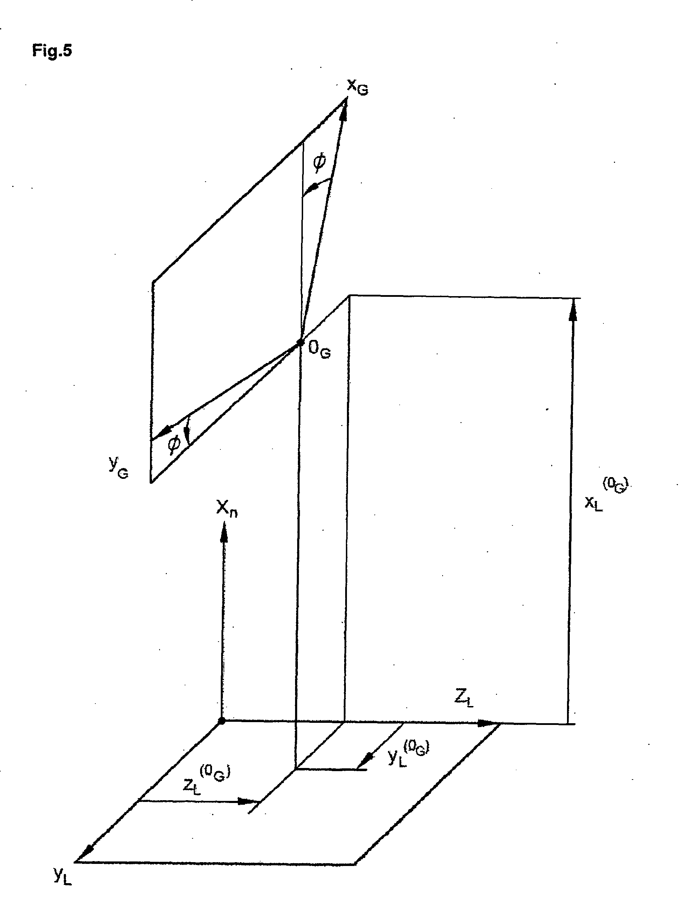

To compute and track one's hand, a new local reference point at the dorsum (backside of the hand's wrist) is defined (Fig.5). For this reason the 6 DOF sensor (second sensor) will be placed there. The dorsum of the hand is the best location for the reference sensor because the relative distance to the metacarpal phalangeal joints does not change. The importance of this condition will become clearer in the following calculations.

It is to be noted that the 6 DOF sensor may be arranged on a palm of the hand instead of on the dorsum. Furthermore, the second sensor may not necessarily be placed directly on the dorsum or palm (i.e. the second sensor is spaced a distance away above the dorsum or below the palm) because the distance between the second sensor and a certain point of the dorsum or palm is constant, so that using the 6 DOF information of the sensor, the position of said point on the dorsum or palm and the orientation of the hand (the orientation of the second sensor is identical to that of the hand even if the second sensor is spaced away from the dorsum or palm) can still be obtained.

Here the field generator's coordinate system is called a global coordinate system while the hand's coordinate system a local coordinate system $C_L$. Point $S$ is represented in coordinate system $C_G$ by the position vector

$$r_G = \left[ x_G, y_G, z_G, 1 \right]^T$$

The same point S can be determined in coordinate system $C_L$ by the position vector

$$r_L = \left[ x_L, y_L, z_L, 1 \right]^T$$

with the Matrix equation

$$r_L = M_{LG} r_G$$

Matrix $M_{LG}$ is represented by

$$M_{LG} = \begin{bmatrix} \cos\left(\widehat{x_L, x_G}\right) & \cos\left(\widehat{x_L, y_G}\right) & \cos\left(\widehat{x_L, z_G}\right) & x_L^{(O_G)} \\ \cos\left(\widehat{y_L, x_G}\right) & \cos\left(\widehat{y_L, y_G}\right) & \cos\left(\widehat{y_L, z_G}\right) & y_L^{(O_G)} \\ \cos\left(\widehat{z_L, x_G}\right) & \cos\left(\widehat{z_L, y_G}\right) & \cos\left(\widehat{z_L, z_G}\right) & z_L^{(O_G)} \\ 0 & 0 & 0 & 1 \end{bmatrix}$$

$O_G$ and $O_L$ are the origins of the "global" and the "local" coordinate system (Fig. 5); subscript $LG$ designation $M_{LG}$ indicates that the transformation is performed from $C_G$ to $C_L$ .

In this way the global coordinates from the sensors $\{S_{L_1}, S_{L_2}, ..., S_{L_5}\}$ mounted on the phalanx distalis of digits and thumb are transformed to the local coordinate system of the reference sensor $S_{G_i} = [x_{G_i}, y_{G_i}, z_{G_i}, 1]^T$.

$$s_{L_i} = M_{LG} s_{G_i} \quad \forall i = \left\{1, 2, ... 5\right\}$$

From now on equations refer to the local coordinate system. Therefore subscripts indicating the coordinate frame are omitted.

The whole hand can be described by the wrist-joint $(^JW)$, the five metacarpal-phalangeal joints $\{A_1, A_2, ..., A_5\}$ , the five proximal-interphalangeal joints $\{B_1, B_2, ..., B_5\}$ and the distal-interphalangeal joints $\{C_1, C_2, ..., C_5\}$ as shown in Fig. 6. Each of these variables represents the joint's local coordinates $[x, y, z]^T$

As mentioned before, the distance between $S_6$ (origin of the local coordinate system of the second sensor) and the metacarpal-phalangeal joints are assumed to be constant. Therefore $\{A_1, A_2, ..., A_5\}$ can be determined by measuring their distances to $S_6$.

With the given transformed points $\{S_{L_1}, S_{L_2}, ..., S_{L_5}\}$ and the measured points $\{A_1, A_2, ..., A_5\}$ the remaining points $\{C_1, C_2, ..., C_5\}$ and $\{B_1, B_2, ..., B_5\}$ can be calculated:

For this, a third coordinate system $C_S$ is determined, which is the local coordinate system of the first sensor, having an origin in its center as illustrated in Fig.7. X and Y - axes of the 5 DOF sensors coordinate system are not determined. Because transformations were only done in the Z-axis this limitation can be ignored.

Two points along the sensor's z-axis are introduced according to Fig. 6.

$$U_s = [0, 0, -l_U]^T \qquad l_U \;\; .... \;\; \text{distance from origin to } U$$

$$W_s = [0, 0, l_W]^T \qquad l_W \;\; .... \;\; \text{distance from origin to } W$$

These points are then transformed to the hand's local coordinate system $C_L$,

$$U_{L_i} = M_{LS} U_{S_i} \quad \forall i = \{1, 2, ...5\}$$

$$W_{L_i} = M_{LS} W_{S_i} \quad \forall i = \{1, 2, ...5\}$$

$|\overrightarrow{uw_i}|$ does have the same length as the distal phalanx of finger $i$. Instead of having the a vector pointing from U to W, it would be more accurate for the following calculations to have the same vector pointing from C to T; T is defined as the finger tip (Fig. 6).

Because A, U and W are on one plane, the vector normal to this plane $\bar{n}_{AUW}$ can be calculated.

$$\vec{n}_{AUW} = \frac{\overrightarrow{au} \times \overrightarrow{uv}}{|\overrightarrow{au} \times \overrightarrow{uv}|}$$

A new point $W' = W + \vec{n}_{AUW}$ can be used to find the vector normal to the plane described by the points A, W and W'. This new vector $\vec{n}_{AWW'}$ is orthogonal to $\overrightarrow{uw_i}$ and is part of the plane A, U, W and can be used to shift the points U and W parallel into the center of the finger to get the point C and T.

$$T_i = W_i + \vec{n}_{AWW'_i} \cdot r_{F_i}$$

$$C_i = U_i + \vec{n}_{AWW'_i} \cdot r_{F_i} \qquad r_{F_i} \;\; ... \;\; \text{radius of finger i}$$

The fact that the proximal-interphalangeal joints have only one degree of freedom allows to calculate point B in 3D-space. In other words, point A, B and C are always moving within the same plane defined by these three points.

To get point B the triangle built by A, B and C is first calculated in 2D-space. The points A, C as well the measured length $|\overrightarrow{ab}|$ (proximal phalanx) and $|\overrightarrow{bc}|$ (intermediate phalanx) are known. Furthermore the distance $|\overrightarrow{ac}|$ can be calculated. Using the law of cosines the angle

$$\alpha = \arccos\left(\frac{|\overrightarrow{ab}|^2 + |\overrightarrow{ac}|^2 - |\overrightarrow{bc}|^2}{2 \cdot |\overrightarrow{ab}| \cdot |\overrightarrow{ac}|}\right)$$

and

$$h = \sin(\alpha) \cdot |\overrightarrow{ab}|$$

$$q = \cos(\alpha) \cdot |\overrightarrow{ab}|$$

can be calculated (according to Fig. 6). Therefore point L is

$$L = A + \overrightarrow{e_{ac}} \cdot q$$

There are endless solutions for B, all of them orthogonal to $\overleftrightarrow{ac}$ around point L. To find the solution on the plane the normal vector $\overrightarrow{n}_{AUW}$ is used to calculate L'.

$$L' = L + \overrightarrow{n}_{AUW}$$

The vector normal to the plane of point A, L and L' is

$$\overrightarrow{n}_{ALL'} = \frac{\overrightarrow{al} \times \overrightarrow{al'}}{|\overrightarrow{al} \times \overrightarrow{al'}|}$$

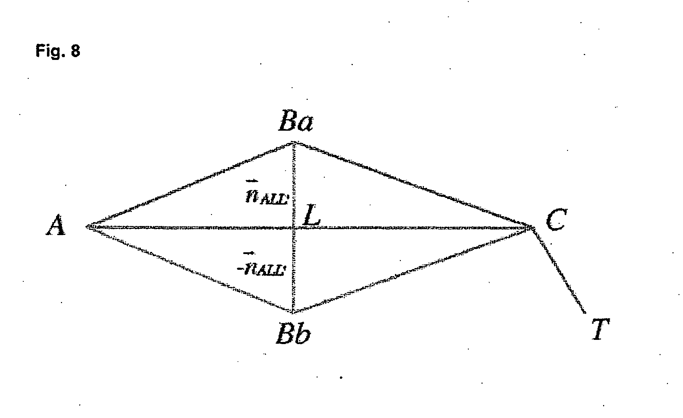

Two solutions on plane ALL' can be found as illustrated in Fig.8.

$$B_a = L_i + \overrightarrow{n}_{ALL'_i} \cdot h$$

$$B_b = L_i - \overrightarrow{n}_{ALL'_i} \cdot h$$

During natural finger movements the flexion of the intermediate phalanges are associated with the flexion of the distal phalanges. The same is true for extension. This fact can be used to find the anatomically correct solution for the intermediate phalangeal join position. (point B in Fig. 8). In other words, the solution (point Ba or Bb) with a greater distance to the finger tip (point T in Fig. 8) is selected.

An operation of the modelling system will now be explained.

The first sensor is attached on a phalanx distalis of each finger while the second sensor is attached on the dorsum of the hand.

The necessary information on the finger of a user is measured. Specifically, a first distance between a point (origin of the second sensor) on the dorsum of the hand and the metacarpal-phalangeal joint A of the finger, a second distance between the metacarpal-phalangeal joint A and the proximal interphalangeal joint B, a third distance between the proximal interphalangeal joint B and the distal interphalangeal joint C, and a fourth distance between the distal interphalangeal joint C and the first sensor are measured. The second distance and the third distance may be measured before attaching the sensors.

Next, a varying magnetic field is generated so that the voltages induced in the sensors are sent as digital data (generated by the SIU) to the SCU. On the basis of the digital data, the SCU detects a position and orientation of each of the first sensors and the second sensor at intervals (e.g. sampling rate of 40Hz). When receiving a signal from the SCU, the host computer calculates a position and orientation of each of the three joints on the basis of the measured first to fourth distances of each finger, the detected position and orientation of the first sensor of each finger, and the detected position and orientation of the second sensor.

The calculated position and orientation of each of the metacarpal-phalangeal joint A, the proximal interphalangeal joint B, and the distal interphalangeal joint C of each finger is supplied to a driver for driving the monitor, in addition to the detected position and orientation of each sensor.

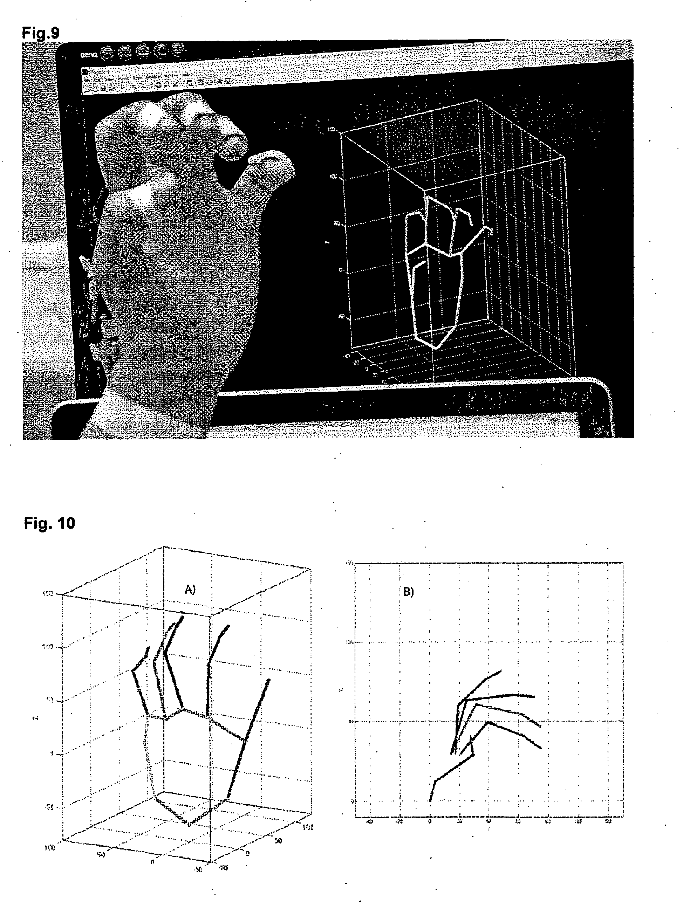

A model of the hand is displayed on the monitor on the basis of the supplied information. A region between the adjacent joints may preferably be displayed as a line connecting the joints, as shown in Figs. 9 and 10.

SECOND EMBODIMENT

Next, a second embodiment of the present invention is explained. A modelling system according to the present embodiment includes a glove with sensors, instead of separate sensors to be attached to the hand.

Specifically, the glove has a first sensor on a portion of each glove finger corresponding to a phalanx distalis of a finger, and a second sensor at a position that is fixed on a portion (which may preferably be located at a non-visible place inside the glove) of the glove finger corresponding to a dorsum or palm of the hand. The first and second sensors are identical to those in the first embodiment. In one example, the first sensor is provided on a glove portion corresponding to the fingernail.

The hardware configuration is similar to that of the first embodiment shown in Fig. 2.

However, in the second embodiment, there is provided a storage (for example in the host computer) for storing a first distance between a point of the dorsum (the second sensor provides 6 DOF information on said point) and a first joint of the glove finger corresponding to a metacarpal-phalangeal joint of the finger, a second distance between the first joint and a second joint of the glove finger corresponding to a proximal interphalangeal joint of the finger, a third distance between the second joint and a third joint of the glove finger corresponding to a distal interphalangeal joint of the finger, and a fourth distance between the third joint and the first sensor.

The SCU is adapted to detect a position and orientation of each of the first and second sensors based on the voltages from the sensors (i.e. digital data from the SIU).

The host computer is further adapted to calculate a position and orientation of each of the three joints of the glove fingers on the basis of the stored first to fourth distances, the detected position and orientation of each of the first sensors, and the detected position and orientation of the second sensor.

The operation (calculation of the position and orientation of each of the three joints) of the modelling system of the present embodiment is similar to that of the first embodiment, and therefore the explanation thereof is omitted.

THIRD EMBODIMENT

Arm-modelling

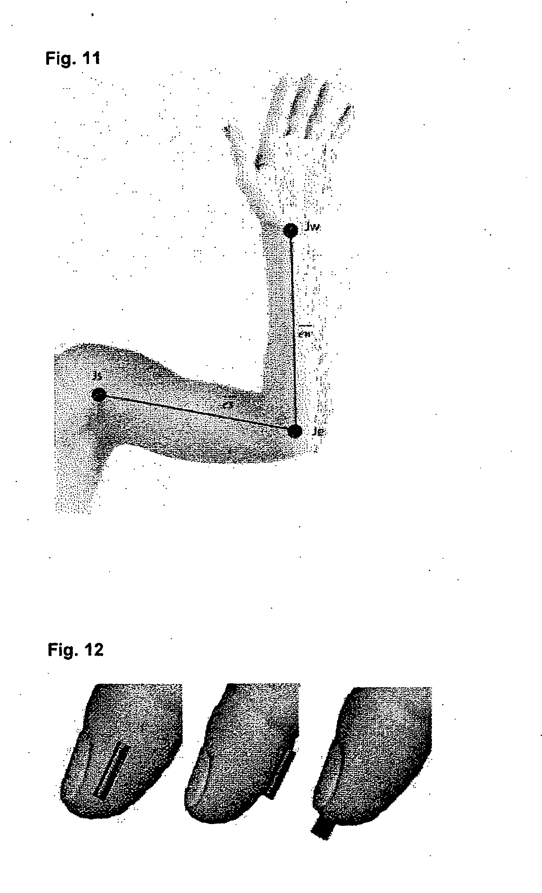

Referring to Fig. 11, a third embodiment of the present invention is explained. In the third embodiment, in addition to the hand-modelling an arm-modelling takes place. Namely, the positions and orientations of a shoulder joint Js, an elbow joint Je and a wrist joint Jw will be determined. These joints are assumed to be on the same plane. Also, the elbow joints Je and wrist joints Jw are preferably on a rotation axis of the forearm.

As explained below, an additional sensor (sensor coil) $S_7$ to be placed on a forearm is needed to calculate positions and orientations of the entire arm. The axis of the sensor coil is placed along a longitudinal direction of the forearm.

A calculation method to be performed by the host computer (Fig. 2) will now be explained.

Assuming the shoulder position to be constant (e.g. the user sits on a chair), the position of the shoulder joint Js is determined. The length of the forearm is measured before the arm modelling.

In the coordinate system $C_L$ of the sensor $S_6$, the position of wrist joint $J_W$ is described by the measured x-, y- and z-distances from the wrist joint to the reference sensor that is the second sensor $S_6$(Fig. 6). Here they are called the distances $W_x$, $W_y$ and $W_z$.

$$Jw = [0 + wx, 0 + wy, 0 + wz]^T$$

The point gets transformed to the global coordinate system:

$$Jw_G = M_{LG}^{-1} \cdot Jw$$

The additional sensor $S_7$ is used to determine a new coordinate system $C_w$ that has the orientation of $S_7$ and its origin at the wrist joint point Jw. The rotation-matrix $M_w$ is therefore defined by the orientation of $S_7$ and the position of Jw.

The position of the elbow joint Je in the coordinate system $C_w$ is:

$$Je_w = [0, 0, -lfa]$$

where *lfa* is the length of the forearm. The position of the elbow joint Je is then transformed into the global coordinate system.

$$Je_G = M_w \cdot Je_w$$

The orientation of the elbow joint Je is the same as that of the sensor $S_7$ - It is noted that the roll angle of the sensor $S_7$ is determined on the basis of the roll angle of the second sensor $S_6$ (since the hand and the arm rotate together around the forearm axis).

As such, the host computer obtains the position of the shoulder joint Js as well as the position and orientations of the wrist joint Jw and the elbow joint Je. This may be further processed, for example, to display the arm model together with the hand model.

Although the additional sensor $S_7$ may be located at an arbitrary position at the forearm as long as the yaw and pitch of the forearm is calculated, it is preferable to locate the sensor $S_7$ close to the sensor $S_6$ because the field generator provides a limited range of magnetic field.

In the same manner as the second embodiment, a glove may be provided with the additional sensor $S_7$- In this case, the sensor $S_7$ will have to be located close to the sensor $S_6$-Although in the present embodiment the sensor coil is used as the third sensor $S_7$ that is the same as the first sensor, i.e. 5 DOF sensor, it is sufficient that the third sensor on the forearm provides information on 2 DOF that correspond to yaw and pitch.

The modelling system and method of the present invention has been explained with reference to the preferred embodiments. However, it should be understood that various changes, substitutions and alternations may be made without departing from the scope of the invention as defined by the appended claims.

For example, in the first and second embodiments the first sensor (finger-sensor) is placed on the fingernail or on a glove portion corresponding to the fingernail. However, the first sensor may be placed on a side of the phalanx-distalis, below the phalanx-distalis, or on a finger tip as shown in Fig. 12.

The first sensors may not necessarily be provided corresponding to all the fingers.

In the first to third embodiments, sensor coils for electro-magnetic tracking are used. Other sensors such as optical sensors, acceleration sensors, or gyroscopes may be used to provide 5 DOF information or 6 DOF information.

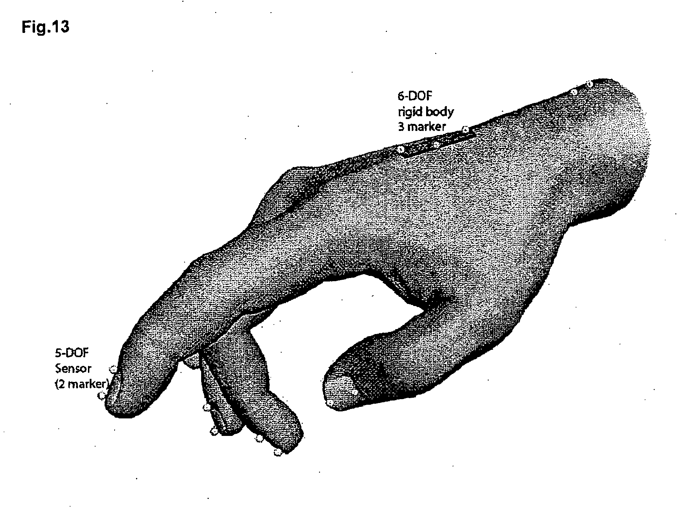

For example, an optical tracking system using reflecting (passive) markers or active markers that can be detected in 3-D space as shown in Fig. 13. may be used. The combination of three markers with constant distance to each other (3 positions in 3-D space) allows acquiring 6 DOF, two markers with constant distance to each other allows acquiring 5 DOF respectively.

Images may be used which are captured from one or more cameras calibrated to provide overlapping projections to compute the position (coordinates) of the markers in space. The markers are positioned so as to guarantee a sufficient difference in comparison to the rest of the captured image to find their positions using video filtering techniques.

However, the use of magnetic sensors as in the first to third embodiments is more advantageous in that in case of the optical tracking system a so-called line of sight is needed.

More than two types of sensors may be used (e.g. an acceleration sensor is used as the third sensor providing at least yaw and pitch information while sensor coils are used as the first and second sensors).

In the first embodiment, the distance between the distal interphalangeal joint C and the first sensor is defined as lu with respect to a surface direction and $r_F$ with respect to a radius direction, so that the joints A, B, C is positioned on an rotation axis of the finger. Although placing the joints on the finger axis allows a more accurate modelling of the position and orientation of the joints A, B, C, it may be possible to define the distance between the distal interphalangeal joint C and the first sensor in a different way (e.g. three joints or joint points are assumed to be not on the finger axis but on the surface of the finger).

The same can be said of the elbow joint Je and the wrist joint Jw in the third embodiment. That is, the elbow and wrist joints may be defined in a plane, which does not contain the forearm axis (although placing the two joints on the forearm axis allows a more accurate modeling of the arm).

In the first embodiment, the distance between the point on the dorsum and the metacarpal-phalangeal joint is measured. However, the following method may be used to evaluate the position of the metacarpal-phalangeal joint so that the measurement of the above-mentioned distance can be omitted (which may otherwise take place every time when the second sensor is attached).

Before the hand motion modeling is started, the x,y and z- position of the metacarpal-phalangeal joints will be found. For this purpose, the user will place his/her hand on a flat surface, such as table, within a measurement volume (e.g., of the magnetic field generator) with all fingers stretched. When the fingers are stretched the angle between the finger joints are assumed to be zero.

In the coordinate system $C_s$ of the first sensors the position of the metacarpal-phalangeal joints is:

$$A_{s_i} = \left[ 0,0,0 - (lu + |\overrightarrow{bc_i}| + |\overrightarrow{ab_i}|] \right]$$

As such, the position of the metacarpal-phalangeal joint A is then transformed to the local coordinate system of the first sensor in the same manner as for point $U_i$ and $W_i$. Further, the joint position is converted to the global coordinate system (i.e. the position and orientation of the first and second sensors are detected) and further to the local coordinate system of the second sensor $S_6$. After that, the hand motion modelling is started.

As a result, the position of the metacarpal-phalangeal joint A relative to the second sensor $S_6$ can be obtained, Therefore, after the hand motion modelling is started, it is possible to follow the position of the metacarpal-phalangeal joint A.

**Industrial Applicability**

The present invention can be applied to a wide range of fields in which modelling of a hand/arm is needed.

For example, information obtained from the hand is used to control a robotic hand. That is, a hand motion is tracked and translated into control signals to move the robotic hand.

Sensors or a glove with sensors may be attached to a non-human primate for a training purpose or a study on how the brain is encoding and planning grasp movements.

Furthermore, the modelling method and system may be used for a hand/arm animation in a film industry or in computer games.

**Claims**

**1.** A method for modelling a position and orientation of a hand, comprising the steps of:

attaching at least a first sensor on a phalanx distalis of at least one finger, wherein said first sensor is adapted to provide information on at least five degrees of freedom that correspond to three translations, yaw and pitch; placing a second sensor at a fixed position relative to a dorsum or palm of the hand, wherein said second sensor is adapted to provide information on at least six degrees of freedom that correspond to three translations, yaw, pitch and roll with respect to a point $(S_6)$ of the dorsum or palm of the hand; detecting a position and orientation of each of the first and second sensors; measuring a first distance between said point $(S_6)$ and a metacarpal-phalangeal joint (A) of the finger, a second distance between the metacarpal-phalangeal joint (A) and a proximal interphalangeal joint (B), a third distance between the proximal interphalangeal joint (B) and a distal interphalangeal joint (C), and a fourth distance between the distal interphalangeal joint (C) and the first sensor; and calculating a position and orientation of each of the three joints on the basis of the measured first to fourth distances, the detected position and orientation of the first sensor, and the detected position and orientation of the second sensor.

2. A method according to claim 1, wherein the first sensor comprises a sensor coil with its axis being placed along a longitudinal direction of the finger, and the second sensor comprises two sensor coils with their axes being placed in a geometrically defined position to each other so that the second sensor provides information on a roll of said point $(S_6)$, further comprising the step of:

generating a varying magnetic field so that the first and second sensors induce voltages, so that at the detection step the position and orientation of each of the first and second sensors is detected based on the induced voltages.

3. A method according to claim 1 or 2, wherein the second sensor is arranged on the dorsum or palm of the hand.

4. A method of providing a signal to a processing device, comprising the steps of modelling a position and orientation according to one of the preceding claims and further comprising the step of generating at least one signal according to the calculated position and orientation.

5. A system for modelling a position and orientation of a hand, comprising:

a glove with glove fingers, comprising at least a first sensor on a portion of the glove finger corresponding to a phalanx distalis of a finger, wherein said first sensor is adapted to provide information on at least five degrees of freedom that correspond to three translations, yaw and pitch; and a second sensor at a position that is fixed on a portion of the glove finger corresponding to a dorsum or palm of the hand, wherein said second sensor is adapted to provide information on at least six degrees of freedom that correspond to three translations, yaw, pitch and roll with respect to a point of the dorsum or palm of the hand, and a device comprising a detector for detecting a position and orientation of each of the first and second sensors; a storage for storing a first distance between said point and a first joint of the glove finger corresponding to a metacarpal-phalangeal joint of the finger, a second distance between the first joint and a second joint of the glove finger corresponding to a proximal interphalangeal joint of the finger, a third distance between the second joint and a third joint of the glove finger corresponding to a distal interphalangeal joint of the finger, and a fourth distance between the third joint and the first sensor; and a calculator for calculating a position and orientation of each of the three joints on the basis of the stored first to fourth distances, the detected position and orientation of the first sensor, and the detected position and orientation of the second sensor.

6. A system according to claim 5, wherein the first sensor comprises a sensor coil with its axis being placed along a longitudinal direction of the glove finger, and the second sensor comprises two sensor coils with their axes being placed in a geometrically defined position to each other so that the second sensor provides information on a roll of said point, further comprising:

a generator for generating a varying magnetic field so that the first and second sensors induce voltages, thereby allowing the detector to detect the position and orientation of each of the first and second sensors based on the induced voltages.

7. A system according to claim 5 or 6, further comprising a generator for generating at least one signal according to the calculated position and orientation.

8. A system according to claim 5, further comprising a wireless transmitting device for transmitting an output of the first sensor and/or the second sensor to a receiver.

9. A method for modelling a position and orientation of a hand, comprising the steps of:

attaching at least a first sensor on a phalanx distalis of a finger, wherein said first sensor is adapted to provide information on at least five degrees of freedom that correspond to three translations, yaw and pitch;
placing a second sensor at a fixed position relative to a dorsum or palm of the hand, wherein said second sensor is adapted to provide information on at least six degrees of freedom that correspond to three translations, yaw, pitch and roll with respect to a point ($S_6$) of the dorsum or palm of the hand;
measuring a first distance between a metacarpal-phalangeal joint (A) and a proximal interphalangeal joint (B), a second distance between the proximal interphalangeal joint (B) and a distal interphalangeal joint (C), and a third distance between the distal interphalangeal joint (C) and the first sensor;
calculating a position of a metacarpal-phalangeal joint (A) relative to the first sensor on the basis of the first to third distances said position being defined as a position in a state that the finger is stretched;
detecting a position and orientation of each of the first and second sensors; and
calculating a position and orientation of each of the three joints on the basis of the measured first to third distances, the calculated relative position of the metacarpal-phalangeal joint (A), the detected position and orientation of the first sensor, and the detected position and orientation of the second sensor.

10. A method according to claim 1 or 9, further comprising steps of modelling a position and orientation of an arm, said steps comprising:

attaching a third sensor ($S_7$) on a forearm, wherein the third sensor is adapted to provide information on at least two degrees of freedom that correspond to yaw and pitch;
providing a position of a shoulder joint (Js);
detecting an orientation of the third sensor ($S_7$) on the basis of an output from the third sensor ($S_7$) and detected roll information of the second sensor ($S_6$);
obtaining an orientation of a wrist joint (Jw) and an elbow joint (Je) on the basis of the detected orientation of the third sensor ($S_7$);
measuring a fifth distance between the wrist joint (Jw) and the second sensor ($S_6$);
calculating a position of the wrist joint (Jw) on the basis of the measured fifth distance and the detected position of the second sensor ($S_6$);
measuring a length of the forearm; and
calculating a position of the elbow joint (Je) on the basis of the measured length of the forearm, the detected orientation of the third sensor ($S_7$) and the calculated position of the wrist joint (Jw).

11. A system according to claim 5, further adapted to model a position and orientation of an arm, wherein
the glove further comprises a third sensor ($S_7$) on a glove portion corresponding to a forearm of the arm, wherein the third sensor is adapted to provide information on at least two degrees of freedom that correspond to yaw and pitch, said detector is adapted to detect yaw and pitch information of the third sensor ($S_7$);
said calculator is adapted to calculate an orientation of the third sensor ($S_7$) on the basis of the detected yaw and pitch Information of the third sensor ($S_7$) and detected roll information of the second sensor ($S_6$);
said storage is adapted to store a position of a shoulder joint (Js), a length of the forearm and a fifth distance between a wrist joint (Jw) and the second sensor ($S_6$);
said calculator is adapted to obtain an orientation of the wrist joint (Jw) and an elbow joint (Je) on the basis of the detected orientation of the third sensor ($S_7$), to calculate a position of the wrist joint (Jw) on the basis of the stored fifth distance and the detected position of the second sensor ($S_6$), and to calculate a position of the elbow joint (Je) on the basis of the stored length of the forearm, the detected orientation of the third sensor ($S_7$) and the calculated position of the wrist joint (Jw).

**Patentansprüche**

1. Verfahren zum Modellieren einer Position und Orientierung einer Hand, mit den Schritten:

Anbringen mindestens eines ersten Sensors an einem Fingerendglied mindestens eines Fingers, wobei der erste Sensor eingerichtet ist, Information über mindestens fünf Freiheitsgrade bereitzustellen, die drei Translationen, einer Gierbewegung und einer Nickbewegung entsprechen;

Anordnen eines zweiten Sensors an einer festen Position relativ zu einem Rücken oder einer Fläche der Hand, wobei der zweite Sensor eingerichtet ist, Information über mindestens sechs Freiheitsgrade bereitzustellen, die drei Translationen, einer Gierbewegung, einer Nickbewegung und einer Rollbewegung bezüglich eines Punkts ($S_6$) des Rückens oder der Fläche der Hand entsprechen;

Detektieren einer Position und Orientierung des ersten und zweiten Sensors;

Messen eines ersten Abstands zwischen dem Punkt ($S_6$) und einem Fingergrundgelenk (A) des Fingers, eines zweiten Abstands zwischen dem Fingergrundgelenk (A) und einem Fingermittelgelenk (B), eines dritten Abstands zwischen dem Fingermittelgelenk (B) und einem Fingerendgelenk (C) und eines vierten Abstands zwischen dem Fingerendgelenk (C) und dem ersten Sensor; und

Berechnen einer Position und Orientierung jedes der drei Gelenke auf der Grundlage der gemessenen ersten bis vierten Abstände, der detektierten Position und Orientierung des ersten Sensors, und der detektierten Position und Orientierung des zweiten Sensors.

2. Verfahren nach Anspruch 1, wobei der erste Sensor eine Sensorspule aufweist, wobei ihre Achse längs einer Längsrichtung des Fingers angeordnet ist, und der zweite Sensor zwei Sensorspulen aufweist, wobei deren Achsen in einer geometrisch definierten Position zueinander angeordnet sind, so dass der zweite Sensor Information über eine Rollbewegung des Punkts ($S_6$) bereitstellt, das ferner den Schritt aufweist:

Erzeugen eines veränderlichen magnetischen Felds, so dass die ersten und zweiten Sensoren Spannungen induzieren, so dass beim Ermittlungsschritt die Position und Orientierung des ersten und zweiten Sensors beruhend auf den induzierten Spannungen detektiert wird.

3. Verfahren nach Anspruch 1 oder 2, wobei der zweite Sensor auf dem auf dem Rücken oder der Fläche der Hand angeordnet ist.

4. Verfahren zur Lieferung eines Signals an eine Verarbeitungsvorrichtung, das die Schritte des Modellierens einer Position und Orientierung nach einem der vorhergehenden Ansprüche aufweist und ferner den Schritt des Erzeugens mindestens eines Signals gemäß der berechneten Position und Orientierung aufweist.

5. System zum Modellierung einer Position und Orientierung einer Hand, mit:

einem Handschuh mit Handschuhfingern, der aufweist mindestens einen ersten Sensor an einem Abschnitt des Handschuhfingers, der einem Fingerendglied eines Fingers entspricht, wobei der erste Sensor eingerichtet ist, Information über mindestens fünf Freiheitsgrade bereitzustellen, die drei Translationen, einer Gierbewegung und einer Nickbewegung entsprechen; und einen zweiten Sensor an einer Position, die an einem Abschnitt des Handschuhfingers fest ist, der einem Rücken oder einer Fläche der Hand entspricht, wobei der zweite Sensor eingerichtet ist, Information über mindestens sechs Freiheitsgrade bereitzustellen, die drei Translationen, einer Gierbewegung, einer Nickbewegung und einer Rollbewegung bezüglich eines Punkts des Rückens oder der Fläche der Hand entsprechen, und

einer Vorrichtung, die aufweist
einen Detektor zum Detektieren einer Position und Orientierung des ersten und zweiten Sensors;
einen Speicher zum Speichern eines ersten Abstands zwischen dem Punkt und einem ersten Gelenk des Handschuhfingers, das einem Fingergrundgelenk des Fingers entspricht, eines zweiten Abstands zwischen dem ersten Gelenk und einem zweiten Gelenk des Handschuhfingers, das einem Fingermittelgelenk des Fingers entspricht, eines dritten Abstands zwischen dem zweiten Gelenk und einem dritten Gelenk des Handschuhfingers, das einem Fingerendgelenk des Fingers entspricht, und eines vierten Abstands zwischen dem dritten Gelenk und dem ersten Sensor; und
einen Rechner zum Berechnen einer Position und Orientierung jedes der drei Gelenke auf der Grundlage der gespeicherten ersten bis vierten Abstände, der detektierten Position und Orientierung des ersten Sensors und der detektierten Position und Orientierung des zweiten Sensors.

6. System nach Anspruch 5, wobei der erste Sensor eine Sensorspule aufweist, wobei ihre Achse längs einer Längsrichtung des Handschuhfingers angeordnet ist, und der zweite Sensor zwei Sensorspulen aufweist, wobei deren Achsen in einer geometrisch definierten Position zueinander angeordnet sind, so dass der zweite Sensor Information über eine Rollbewegung des Punkts bereitstellt, das ferner aufweist:

einen Generator zum Erzeugen eines veränderlichen magnetischen Felds, so dass der erste und zweite Sensors Spannungen induziert, wodurch es ermöglicht wird, dass der Detektor die Position und Orientierung des ersten und zweiten Sensors beruhend auf den induzierten Spannungen detektiert.

7. System nach Anspruch 5 oder 6, das ferner einen Generator zum Erzeugen mindestens eines Signals gemäß der berechneten Position und Orientierung aufweist.

8. System nach Anspruch 5, das ferner eine drahtlose Sendevorrichtung zum Senden einer Ausgabe des ersten Sensors und/oder des zweiten Sensors an einen Empfänger aufweist.

9. Verfahren zum Modellieren einer Position und Orientierung einer Hand, mit den Schritten:

Anbringen mindestens eines ersten Sensors an einem Fingerendglied eines Fingers, wobei der erste Sensor eingerichtet ist, Information über mindestens fünf Freiheitsgrade bereitzustellen, die drei Translationen, einer Gierbewegung und einer Nickbewegung entsprechen;
Anordnen eines zweiten Sensors an einer festen Position relativ zu einem Rücken oder einer Fläche der Hand, wobei der zweite Sensor eingerichtet ist, Information über mindestens sechs Freiheitsgrade bereitzustellen, die drei Translationen, einer Gierbewegung, einer Nickbewegung und einer Rollbewegung bezüglich eines Punkts ($S_6$) des Rückens oder der Fläche der Hand entsprechen;
Messen eines ersten Abstands zwischen einem Fingergrundgelenk (A) und einem Fingermittelgelenk (B), eines zweiten Abstands zwischen dem Fingermittelgelenk (B) und einem Fingerendgelenk (C) und eines dritten Abstands zwischen dem Fingerendgelenk (C) und dem ersten Sensor;
Berechnen einer Position eines Fingergrundgelenks (A) relativ zum ersten Sensor auf der Grundlage der ersten bis dritten Abstände, wobei die Position als eine Position in einem Zustand definiert ist, in dem der Finger gestreckt ist;
Detektieren einer Position und Orientierung des ersten und zweiten Sensors; und
Berechnen einer Position und Orientierung jedes der drei Gelenke auf der Grundlage der gemessenen ersten bis dritten Abstände, der berechneten relativen Position des Fingergrundgelenks (A), der detektierten Position und Orientierung des ersten Sensors und der detektierten Position und Orientierung des zweiten Sensors.

10. Verfahren nach Anspruch 1 oder 9, das ferner Schritte des Modellierens einer Position und Orientierung eines Arm aufweist, wobei die Schritte aufweisen:

Anbringen eines dritten Sensors ($S_7$) an einem Unterarm, wobei der dritte Sensor eingerichtet ist, Information über mindestens zwei Freiheitsgrade bereitzustellen, die einer Gierbewegung und einer Nickbewegung entsprechen;
Bereitstellen einer Position eines Schultergelenks (Js);
Detektieren einer Orientierung des dritten Sensors ($S_7$) auf der Grundlage einer Ausgabe aus dem dritten Sensor ($S_7$) und der detektierten Rollbewegungsinformation des zweiten Sensors ($S_6$);
Erhalten einer Orientierung eines Handgelenks (Jw) und eines Ellbogengelenks (Je) auf der Grundlage der detektierten Orientierung des dritten Sensors ($S_7$);
Messen eines fünften Abstands zwischen dem Handgelenk (Jw) und dem zweiten Sensor ($S_6$);
Berechnen einer Position des Handgelenks (Jw) auf der Grundlage des gemessenen fünften Abstands und der detektierten Position des zweiten Sensors ($S_6$);
Messen einer Länge des Unterarms; und
Berechnen einer Position des Ellbogengelenks (Je) auf der Grundlage der gemessenen Länge des Unterarms, der detektierten Orientierung des dritten Sensors ($S_7$) und der berechneten Position des Handgelenks (Jw).

11. System nach Anspruch 5, das ferner eingerichtet ist, eine Position und Orientierung eines Arms zu modellieren, wobei der Handschuh ferner einen dritten Sensor ($S_7$) an einem Handschuhabschnitt aufweist, der einem Unterarm des Arms entspricht, wobei der dritte Sensor eingerichtet ist, Information über mindestens zwei Freiheitsgrade bereitzustellen, die einer Gierbewegung und einer Nickbewegung entsprechen,
der Detektor eingerichtet ist, Gierbewegungs- und Nickbewegungsinformation des dritten Sensors ($S_7$) zu detektieren; der Rechner eingerichtet ist, eine Orientierung des dritten Sensors ($S_7$) auf der Grundlage der detektierten Gierbewegungs- und Nickbewegungsinformation des dritten Sensors ($S_7$) und der detektierten Rollbewegungsin-

formation des zweiten Sensors ($S_6$) zu berechnen;

der Speicher eingerichtet ist, eine Position eines Schultergelenk (Js), eine Länge des Unterarms und einen fünften Abstand zwischen einem Handgelenk (Jw) und dem zweiten Sensor ($S_6$) zu speichern;

der Rechner eingerichtet ist, eine Orientierung des Handgelenks (Jw) und eines Ellbogengelenks (Je) auf der Grundlage der detektierten Orientierung des dritten Sensors ($S_7$) zu erhalten, eine Position des Handgelenks (Jw) auf der Grundlage des gespeicherten fünften Abstands und der detektierten Position des zweiten Sensors ($S_6$) zu berechnen, und eine Position des Ellbogengelenks (Je) auf der Grundlage der gespeicherten Länge des Unterarms, der detektierten Orientierung des dritten Sensors ($S_7$) und der berechneten Position des Handgelenks (Jw) zu berechnen.

**Revendications**

1. Procédé de modélisation d'une position et d'une orientation d'une main, comprenant les étapes suivantes :

   fixation d'au moins un premier capteur sur une phalange distale d'au moins un doigt, le premier capteur étant prévu pour délivrer une information sur au moins cinq degrés de liberté correspondant à trois translations, au lacet et au tangage ;

   mise en place d'un deuxième capteur sur une position fixe relative au dos ou à la paume de la main, le deuxième capteur étant prévu pour délivrer une information sur au moins six degrés de liberté correspondant à trois translations, au lacet, au tangage et au roulis, par rapport à un point ($S_6$) du dos ou de la paume de la main ;

   détection d'une position et d'une orientation du premier et du deuxième capteurs ;

   mesure d'une première distance entre le point ($S_6$) et une articulation métacarpo-phalangienne (A) du doigt, d'une deuxième distance entre l'articulation métacarpo-phalangienne (A) et une articulation interphalangienne proximale (B), d'une troisième distance entre l'articulation interphalangienne proximale (B) et une articulation interphalangienne distale (C), et d'une quatrième distance entre l'articulation interphalangienne distale (C) et le premier capteur ; et

   calcul d'une position et d'une orientation de chacune des trois articulations sur la base de la première à la quatrième distances mesurées, de la position et de l'orientation détectées du premier capteur, et de la position et de l'orientation détectées du deuxième capteur.

2. Procédé selon la revendication 1, où le premier capteur comporte un enroulement de capteur dont l'axe s'étend dans une direction longitudinale du doigt, et le deuxième capteur comprend deux enroulements de capteur dont les axes s'étendent suivant une position géométriquement définie l'un par rapport à l'autre, de telle manière que le deuxième capteur délivre une information sur un roulis du point ($S_6$),
   comprenant en outre l'étape suivante :

   génération d'un champ magnétique variable, de telle manière que le premier et le deuxième capteurs induisent des tensions telles qu'à l'étape de détection, la position et l'orientation du premier et du deuxième capteurs sont détectées sur la base des tensions induites.

3. Procédé selon la revendication 1 ou la revendication 2, où le deuxième capteur est disposé sur le dos ou la paume de la main.

4. Procédé de délivrance d'un signal à un dispositif de traitement, comprenant les étapes de modélisation d'une position et d'une orientation selon l'une des revendications précédentes, et comprenant en outre l'étape de génération d'au moins un signal en fonction de la position et de l'orientation calculées.

5. Système de modélisation d'une position et d'une orientation d'une main, comprenant :

   un gant avec des doigts de gant, comportant
   au moins un premier capteur sur une partie du doigt de gant correspondant à une phalange distale d'un doigt, le premier capteur étant prévu pour délivrer une information sur au moins cinq degrés de liberté correspondant à trois translations, au lacet et au tangage ; et un deuxième capteur à une position fixée sur une partie du doigt de gant correspondant au dos ou à la paume de la main, le deuxième capteur étant prévu pour délivrer une information sur au moins six degrés de liberté correspondant à trois translations, au lacet, au tangage et au roulis par rapport à un point du dos ou de la paume de la main, et
   un dispositif comportant

un détecteur destiné à détecter une position et une orientation du premier et du deuxième capteurs ;

une mémoire destinée à sauvegarder une première distance entre ledit point et une première articulation du doigt de gant correspondant à une articulation métacarpo-phalangienne du doigt, une deuxième distance entre la première articulation et une deuxième articulation du doigt de gant correspondant à une articulation interphalangienne proximale du doigt, une troisième distance entre la deuxième articulation et une troisième articulation du doigt de gant correspondant à une articulation interphalangienne distale du doigt, et une quatrième distance entre la troisième articulation et le premier capteur ; et

un calculateur destiné à calculer une position et une orientation de chacune des trois articulations sur la base de la première à la quatrième distances sauvegardées, la position et l'orientation détectées du premier capteur, et la position et l'orientation détectées du deuxième capteur.

6. Système selon la revendication 5, où le premier capteur comprend un enroulement de capteur dont l'axe est dans une direction longitudinale du doigt de gant, et le deuxième capteur comprend deux enroulements de capteur dont les axes s'étendent suivant une position géométriquement définie l'un par rapport à l'autre, de telle manière que le deuxième capteur délivre une information sur un roulis du point, comprenant en outre :

un générateur destiné à générer un champ magnétique variable, de telle manière que le premier et le deuxième capteurs induisent des tensions permettant au détecteur de détecter la position et l'orientation du premier et du deuxième capteurs sur la base des tensions induites.

7. Système selon la revendication 5 ou la revendication 6, comprenant en outre un générateur destiné à générer au moins un signal en fonction de la position et de l'orientation calculées.

8. Système selon la revendication 5, comprenant en outre un dispositif de transmission sans fil destiné à transmettre une sortie du premier capteur et/ou du deuxième capteur vers un récepteur.

9. Procédé de modélisation d'une position et d'une orientation d'une main, comprenant les étapes suivantes :

fixation d'au moins un premier capteur sur une phalange distale d'un doigt, le premier capteur étant prévu pour délivrer une information sur au moins cinq degrés de liberté correspondant à trois translations, au lacet et au tangage ;

mise en place d'un deuxième capteur sur une position fixe relative au dos ou à la paume de la main, le deuxième capteur étant prévu pour délivrer une information sur au moins six degrés de liberté correspondant à trois translations, au lacet, au tangage et au roulis par rapport à un point ($S_6$) du dos ou de la paume de la main ;

mesure d'une première distance entre une articulation métacarpo-phalangienne (A) et une articulation interphalangienne proximale (B), d'une deuxième distance entre l'articulation interphalangienne proximale (B) et une articulation interphalangienne distale (C), et d'une troisième distance entre l'articulation interphalangienne distale (C) et le premier capteur ;

calcul d'une position d'une articulation métacarpo-phalangienne (A) relative au premier capteur sur la base de la première à la troisième distances, ladite position étant définie comme position dans un état ou le doigt est en extension ;

détection d'une position et d'une orientation du premier et du deuxième capteurs ; et

calcul d'une position et d'une orientation de chacune des trois articulations sur la base de la première à la troisième distances mesurées, de la position relative calculée de l'articulation métacarpo-phalangienne (A), de la position et de l'orientation détectées du premier capteur, et de la position et de l'orientation détectées du deuxième capteur.

10. Procédé selon la revendication 1 ou la revendication 9, comprenant en outre les étapes de modélisation d'une position et d'une orientation d'un bras, lesdites étapes comprenant :

la fixation d'un troisième capteur ($S_7$) sur un avant-bras, le troisième capteur étant prévu pour délivrer une information sur au moins deux degrés de liberté correspondant au lacet et au tangage ;

la délivrance d'une position d'une articulation de l'épaule (Js) ;

la détection d'une orientation du troisième capteur ($S_7$) sur la base d'une sortie du troisième capteur ($S_7$) et d'une information de roulis détectée du deuxième capteur ($S_6$) ; l'obtention d'une orientation d'une articulation du poignet (Jw) et d'une articulation du coude (Je) sur la base de l'orientation détectée du troisième capteur ($S_7$) ;

mesure d'une cinquième distance entre l'articulation du poignet (Jw) et le deuxième capteur ($S_6$) ;

calcul d'une position de l'articulation du poignet (Jw) sur la base de la cinquième distance mesurée et de la position détectée du deuxième capteur ($S_6$) ;

mesure d'une longueur de l'avant-bras ; et

calcul d'une position de l'articulation du coude (Je) sur la base de la longueur mesurée de l'avant-bras, de l'orientation détectée du troisième capteur ($S_7$) et de la position calculée de l'articulation du poignet (Jw).

**11.** Système selon la revendication 5, prévu en outre pour modéliser une position et une orientation d'un bras, où le gant comprend en outre un troisième capteur ($S_7$) sur une partie de gant correspondant à un avant-bras du bras, le troisième capteur étant prévu pour délivrer une information sur au moins deux degrés de liberté correspondant au lacet et au tangage,

le détecteur étant prévu pour détecter une information de lacet et de tangage du troisième capteur ($S_7$) ;

le calculateur étant prévu pour calculer une orientation du troisième capteur ($S_7$) sur la base de l'information de lacet et de tangage détectée du troisième capteur ($S_7$) et de l'information de roulis détectée du deuxième capteur ($S_6$) ; la mémoire étant prévue pour sauvegarder une position d'une articulation de l'épaule (Js), une longueur de l'avant-bras et une cinquième distance entre une articulation du poignet (Jw) et le deuxième capteur ($S_6$) ;

le calculateur étant prévu pour obtenir une orientation de l'articulation du poignet (Jw) et une articulation du coude (Je) sur la base de l'orientation détectée du troisième capteur ($S_7$), pour calculer une position de l'articulation du poignet (Jw) sur la base de la cinquième distance mémorisée et de la position détectée du deuxième capteur ($S_6$), et pour calculer une position de l'articulation du coude (Je) sur la base de la longueur mémorisée de l'avant-bras, de l'orientation détectée du troisième capteur ($S_7$) et de la position calculée de l'articulation du poignet (Jw).

**Fig. 1**

Distal phalanges

Intermediate phalanges

Proximal phalanges

Metacarpals

Carpals

**Fig. 2**

Serial cable to host computer

Power cable

System Control Unit

Field Generator

Sensor Interface Unit

Tool containing sensors

**Fig. 3**

Fig.4

**Fig.5**

EP 2 418 562 B1

**Fig. 6**

**Fig. 7**

Tool body

Sensor

Origin

z-axis

22

Fig. 8

**Fig.9**

**Fig. 10**

**Fig. 11**

**Fig. 12**

Fig.13

**EP 2 418 562 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2002002014 A

### Non-patent literature cited in the description

- **SIMON A. OVERDUIN et al.** An instrumented glove for small primates. *Journal of Neuroscience Methods,* 2010, vol. 187, 100-104